Europäisches Patentamt

European Patent Office

Office européen des brevets

(19)

(11) Numéro de publication : **0 014 603**
**B1**

(12)

# FASCICULE DE BREVET EUROPÉEN

(45) Date de publication du fascicule du brevet :
23.12.81.

(51) Int. Cl.³ : **G 01 M 15/00**

(21) Numéro de dépôt : 80400027.1

(22) Date de dépôt : 10.01.80

(54) **Méthode et dispositif de mesure du taux de recirculation de gaz d'échappement dans un moteur à combustion interne.**

(30) Priorité : 01.02.79 FR 7902650

(43) Date de publication de la demande :
20.08.80 (Bulletin 80/17)

(45) Mention de la délivrance du brevet :
23.12.81 Bulletin 81/51

(84) Etats contractants désignés :
CH DE GB IT NL SE

(56) Documents cités :
US - A - 3 872 846
US - A - 4 095 462

(73) Titulaire : REGIE NATIONALE DES USINES RENAULT
Boîte postale 103 8-10 avenue Emile Zola
F-92109 Boulogne-Billancourt (FR)

(72) Inventeur : Cochard, Pierre
8, rue des Orfèvres
F-91770 Saint Vrain (FR)
Inventeur : de Sainte Marie, Bruno
La Prairie A8
F-91290 Arpajon (FR)

(74) Mandataire : Réal, Jacques et al
8 & 10, avenue Emile Zola
F-92109 Boulogne Billancourt (FR)

EP 0 014 603 B1

Imprimerie Jouve, 17, rue du Louvre, 75001 Paris, France

## Méthode et dispositif de mesure du taux de recirculation de gaz d'échappement dans un moteur à combustion interne

La présente invention, due à la collaboration technique de MM. Pierre COCHARD et Bruno de SAINTE MARIE, a pour objet une méthode de mesure des taux de recirculation dans un moteur à combustion interne afin de contrôler le dispositif de recirculation équipant un tel moteur.

Les méthodes connues existantes pour mesurer le débit de gaz d'échappement consistent à utiliser un diaphragme de section connue et à mesurer les pressions amont et aval, puis à calculer le débit. De telles méthodes sont relativement imprécises car, si ce dispositif de mise en œuvre est appliqué directement sur le système de recirculation du moteur, il est nécessaire de corriger les valeurs calculées à la fois en fonction du régime pulsatoire et de la densité des gaz (température-composition) pour avoir un débit massique.

Le montage d'un tel dispositif n'est pas toujours aisé et provoque en outre une perturbation de fonctionnement du dispositif de recirculation à cause des pertes de charge. Si, de plus, on veut connaître le taux de recirculation, il est nécessaire de mesurer le débit de gaz admis par le moteur, ce qui est compliqué.

Le moyen de connaître directement le débit de gaz recirculé et par là même le taux de recirculation ne peut donc s'effectuer actuellement de façon simple sur un moteur. Il est donc particulièrement difficile en après-vente de s'assurer du bon fonctionnement d'un dispositif de recirculation en service sur le moteur. La seule méthode approximative consiste à démonter le dispositif de recirculation et à le contrôler sur un banc qui a été prévu à cet effet. Le banc de mesure doit être muni de deux sources de dépression, dont l'une sert à la commande du dispositif tandis que l'autre est destinée à créer un débit d'air dans l'appareil que l'on mesure, où, à défaut, il est possible de mesurer une section de passage.

Cette deuxième façon d'opérer entraîne les inconvénients suivants :

— il est nécessaire de démonter le dispositif sur le moteur, lors de l'essai au banc, puis de le remonter une fois l'essai terminé ;

— les conditions dans lesquelles le dispositif est testé sont différentes des conditions de fonctionnement (température, vibrations, etc.), ce qui peut empêcher de mettre en évidence un défaut de fonctionnement du dispositif lorsqu'il est en service réel ;

— il est en outre difficile de retrouver des conditions d'essai à pression de commande et débit proches de la réalité.

La présente invention vise à obvier aux inconvénients des méthodes de l'art antérieur en fournissant une méthode selon laquelle on détermine, d'une part, le taux de gaz carbonique dans le gaz d'échappement et, d'autre part, le taux de gaz carbonique dans une zone du collecteur d'admission située en aval du point d'introduction des gaz recirculés, le rapport de ces deux paramètres fournissant une valeur exacte du taux de recirculation des gaz d'échappement.

L'invention vise également un dispositif destiné à la mise en œuvre de cette méthode, ce dispositif comportant des moyens de prélèvement des gaz au niveau du collecteur d'admission en un point de ce dernier situé en aval du ou des points d'injection des gaz recyclés et des moyens de prélèvement des gaz au niveau de l'échappement, chacun de ces moyens étant associé à des moyens de sélection pour le transfert de chaque courant des gaz ainsi prélevés à un dispositif analyseur de leur teneur en $CO_2$.

Un mode particulier de réalisation de ce dispositif est en outre remarquable par les points suivants :

— les moyens de prélèvement d'un courant de gaz au niveau de l'admission sont constitués par un dispositif générateur de vide associé à une chambre tampon connectée, d'une part, au système analyseur et, d'autre part, à un organe régulateur de pression ;

— les moyens de sélection sont constitués par un robinet ou vanne de sélection à trois voies, actionné mécaniquement ou automatiquement.

L'invention sera mieux comprise à la lecture de la description qui va suivre d'une forme et d'un mode de réalisation non limitatifs, en référence au dessin annexe dans lequel :

la figure 1 est une vue schématique d'un dispositif de recirculation des gaz brûlés pourvu d'un dispositif de contrôle selon la présente invention ;

la figure 2 est une vue schématique du dispositif générateur de vide utilisé dans le dispositif de contrôle selon l'invention.

En point 5 situé sur le collecteur d'admission 2 d'un moteur à combustion interne 1, en aval des orifices de recyclage 4a, 4b des gaz brûlés transférés par un système de commande de recirculation 4, est prélevé un courant de gaz au moyen d'un système générateur de vide 7. Dans l'axe du collecteur d'échappement 3 est disposé un conduit 6 afin de prélever un courant de gaz d'échappement de même composition chimique que les gaz recirculés par le système 4.

Les courants aboutissent à un robinet ou vanne de sélection à trois voies 8 qui les dirigent à tour de rôle vers un système analyseur 9 de la teneur des gaz en $CO_2$.

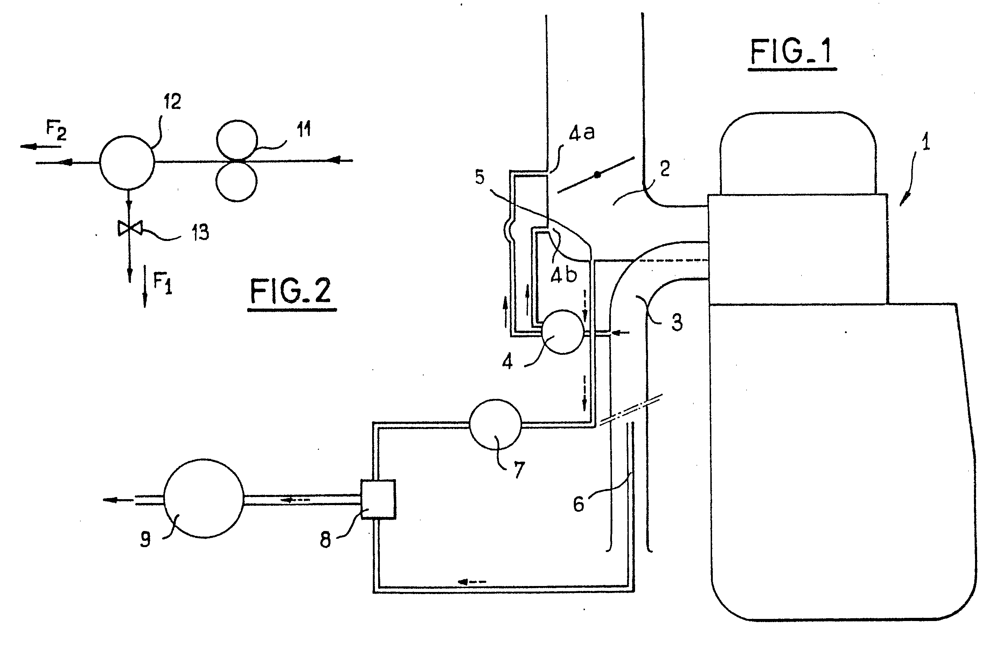

Le système générateur de vide 7 se compose comme représenté sur la figure 2 d'une pompe à vide classique 11 en aval de laquelle est montée une chambre tampon 12 connectée, d'une part, selon la flèche $F_2$ au robinet sélecteur 8 et, d'autre part, selon la flèche $F_1$ à un organe régulateur de pression 13, par exemple une valve ou robinet, destiné à maintenir ladite chambre 12 à pression sensiblement constante (par exemple environ 1 atm).

Le dispositif est à même de fonctionner de la manière suivante : le moteur est mis en route soit à l'arrêt, soit pour la marche du véhicule, puis réglé à un certain régime pour lequel on réalise les mesures des teneurs de $CO_2$ dans les gaz d'admission et les gaz d'échappement.

1. Mesure de la teneur de $CO_2$ dans les gaz d'admission

a) étant donné que leur point de prélèvement 5 est situé dans une partie du collecteur 2 située nettement en aval des orifices 4a et 4b, tous les gaz d'échappement recirculés sont bien mélangés avec les gaz frais ;

b) on met en marche la pompe à vide 11 (figure 2) de façon à extraire un certain volume de gaz qu'elle débite dans un réservoir 12 (figure 2) maintenu à pression absolue sensiblement constante (par exemple environ 1 atm) par le régulateur de pression 13 (figure 2) ;

c) le robinet trois voies 8 est ensuite positionné pour permettre la circulation du gaz du réservoir 2 vers l'analyseur de $CO_2$ 9 (figure 1) ;

d) la teneur en $CO_2$ appelée (a) des gaz frais affichée par l'analyseur 9 est alors relevée.

2. Mesure de la teneur en $CO_2$ dans les gaz d'échappement

a) le robinet trois voies 8 est orienté pour qu'un prélèvement de gaz d'échappement par l'intermédiaire d'un tuyau souple 6 introduit axialement dans le tuyau d'échappement, ou tout autre moyen, puisse être transféré à l'analyseur 9 ;

b) la teneur en $CO_2$ dans les gaz d'échappement affichée par l'analyseur 9 et appelée (b) est relevée.

3. Calcul du taux d'EGR (recirculation des gaz d'échappement) Le taux d'EGR est alors donné par la formule :

$$= \frac{a}{b - a}$$

dans laquelle a et b sont définis comme ci-dessus.

Il y a lieu de remarquer que les moyens de mise en œuvre de l'invention pour contrôler le taux de recirculation sont simples et peu coûteux car l'analyseur et la pompe à vide existent dans le commerce, la seule modification à apporter au moteur pour effectuer le contrôle consistant pour le constructeur à prévoir un orifice de prélèvement de gaz dans le collecteur d'admission.

Il est, par ailleurs, à noter que, souvent, un trou de ce type existe déjà pour d'autres fonctions, par exemple, pour la réaspiration des gaz de carter.

Il est clair que la méthode de l'invention permet un contrôle rapide du système de recirculation d'un moteur : il suffit, en effet, de faire deux mesures successives de teneur en $CO_2$ dans l'admission et dans l'échappement pour obtenir le taux de recirculation effectif. Cette méthode permet donc de mesurer directement un taux de recirculation (rapport du débit massique de gaz d'échappement au débit massique de gaz frais).

Or, c'est ce paramètre qui est déterminant sur le fonctionnement du moteur en ce qui concerne sa stabilité de marche et son taux de dépollution.

Un tel paramètre n'est pas auparavant mesurable de façon simple par une autre méthode basée sur la mesure directe des débits.

La vérification du dispositif de recirculation des gaz d'échappement peut être faite soit dans une station (véhicule arrêté — moteur tournant ou véhicule sur rouleaux — moteur tournant), soit en essai route avec la pompe à vide et l'analyseur embarqués.

Une telle mesure faite en service ne perturbe pas le fonctionnement du moteur puisque le débit de gaz nécessaire à l'analyseur représente moins de 1 % du débit d'air aspiré par le moteur dans toutes les conditions de fonctionnement.

Il est bien évident que l'invention n'est nullement limitée aux formes et modes de réalisation décrits ci-dessus, mais qu'elle englobe toutes les réalisations et variantes à la portée de l'homme de l'art.

**Revendications**

1. Méthode de mesure du taux de recirculation de gaz d'échappement dans un moteur à combustion interne, caractérisée par le fait que l'on détermine, d'une part, le taux de gaz carbonique dans le gaz d'échappement et, d'autre part, le taux de gaz carbonique dans une zone du collecteur d'admission située en aval du point d'introduction des gaz recirculés, le rapport de ces deux paramètres fournissant une valeur exacte du taux de recirculation des gaz d'échappement.

2. Dispositif pour la mise en œuvre de la méthode selon la revendication 1, caractérisé par le fait qu'il comporte des moyens de prélèvement des gaz au niveau du collecteur d'admission en un point de ce dernier situé en aval du ou des points d'injection des gaz recyclés et des moyens de prélèvement des gaz au niveau de l'échappement, chacun de ces moyens étant associé à des moyens de sélection pour le transfert de chaque courant des gaz ainsi prélevés à un dispositif analyseur de leur teneur en $CO_2$.

3. Dispositif selon la revendication 2, caractérisé par le fait que les moyens de prélèvement d'un courant de gaz au niveau de l'admission sont constitués par un dispositif générateur de vide associé à une chambre tampon connectée, d'une part, au système analyseur et, d'autre part, à un organe régulateur de pression.

4. Dispositif selon la revendication 2, caractérisé par le fait que les moyens de sélection sont constitués par un robinet ou vanne de sélection à trois voies, actionné mécaniquement ou automatiquement.

**Claims**

1. A method of measuring the recirculation rate of exhaust gases in an internal combustion engine, characterized in that it comprises, on the one hand, determining the carbon dioxide content of the exhaust gases and, on the other hand, determining the carbon dioxide content in a zone of the combustible mixture inlet conduit, wich is located downstream of the point of introduction of the recirculated gases, the ratio of these two parameters providing an accurate value of the rate of recirculation of the exhaust gases.

2. An installation for carrying out the method according to claim 1, characterized in that it comprises means for sampling gases from the combustible mixture inlet conduit at a point thereof which is located downstream of the point, or points, of injection of the recirculated gases, and means for sampling gases from the exhaust gas stream, each one of said means being associated to selective transfer means for transferring each current of the thus sampled gases to a device for analyzing their $CO_2$ content.

3. An installation according to claim 2, characterized in that the means for sampling a gas current from the combustible mixture inlet conduit is constituted by a vacuum-generating device associated to a buffer chamber which is connected, on the one hand, to the analyzing system and, on the other hand, to a pressure regulating organ.

4. An installation according to claim 2, characterized in that the selective transfer means are constituted by a mechanically or automatically three-way selecting cock or valve.


**Ansprüche**

1. Verfahren zum Messen der Auspuffgas-Rückführungsrate bei einem Verbrennungsmotor, dadurch gekennzeichnet, dass man einerseits den Kohlendioxydgehalt des Auspuffgases und andererseits den Kohlendioxydgehalt in einer stromabwärts der Einlass-Stelle der rückgeführten Gase gelegenen Zone der Gemischeinlassleitung bestimmt, wobei das Verhältnis dieser beiden Parameter einen genauen Wert der Auspuffgas-Rückführungsrate darstellt.

2. Vorrichtung zur Durchführung des Verfahrens nach Anspruch 1, dadurch gekennzeichnet, dass sie Mittel zur Gasentnahme an einer in der Gemischeinlassleitung stromabwärts der Einlass-Stelle bzw. Einlass-Stellen der rückgeführten Gase gelegenen Stelle, sowie Mittel zur Gasentnahme aus dem Auspuffgasstrom aufweist, wobei jedes dieser Mittel mit Mitteln zur wahlweisen Zuleitung jedes Stromes der entnommenen Gase zu einer den $CO_2$-Gehalt dieser entnommenen Gasströme bestimmenden Analysiereinrichtung zusammenwirkt.

3. Vorrichtung nach Anspruch 2, dadurch gekennzeichnet, dass die Mittel zur Entnahme eines Gasstromes aus der Gemischeinlassleitung aus einer einen Unterdruck erzeugenden Einrichtung bestehen, die mit einer einerseits mit der Analysiereinrichtung und andererseits mit einem Druckregulierorgan verbundenen Pufferkammer zusammenwirkt.

4. Vorrichtung nach Anspruch 2, dadurch gekennzeichnet, dass die Mittel zur wahlweisen Gasstromzuleitung aus einem mechanisch oder automatisch betätigten Dreiweghahn bzw. Dreiwegventil bestehen.

FIG._1

FIG._2

0 014 603